# EUROPEAN PATENT APPLICATION

(11) **EP 2 266 680 A1**
(43) Date of publication of application: **29.12.2010**
(21) Application number: 09007467.5
(22) Date of filing: 05.06.2009
(51) Int. Cl.: B01D 53/04, B01D 53/047, B01J 20/22

(54) **Amine containing fibrous structure for adsorption of CO2 from atmospheric air**

(71) Applicant: ETH Zürich, ETH Transfer, 8092 Zürich (CH)
(72) Inventor: Gebald, Christoph, 8057 Zürich (CH); Wurzbacher, Jan André, 8045 Zürich (CH); Steinfeld, Aldo, 5200 Brugg/AG (CH)

(57) **Abstract**

A structure is disclosed containing a sorbent with amine groups that is capable of a reversible adsorption and desorption cycle for capturing CO2 from a gas mixture wherein said structure is composed of fiber filaments wherein the fiber material is carbon and/or polyacrylonitrile.

## Description

### TECHNICAL FIELD

The present invention relates to amine containing fibrous structure for CO2 capture from atmospheric air, to methods of making such fibrous structures and to uses of such fibrous structures.

### PRIOR ART

According to the fourth IPCC Assessment Report, CO2 capture from combustion flue gases will not be enough to stabilize the global CO2 emissions. CO2 capture from atmospheric air is considered as a promising option in the portfolio of technologies to mitigate climate change.

Furthermore, CO2 capture from air is already to today an interesting business opportunity to produce CO2 for a niche market of CO2 customers, e.g. greenhouses fertilizing with CO2, the process industry using CO2 as an inert gas, energy firms doing enhanced oil recovery.

With the availability of renewable hydrogen in the future, the captured CO2 and hydrogen can be synthesized to renewable fuels.

The published literature on CO2 capture from atmospheric air is scarce, although stabilization of CO2 emissions is unlikely to be achieved without CO2 capture from atmospheric air. To capture CO2 from atmospheric air and release it afterwards as commodity, a solar thermochemical cycle based on the carbonation of calcium oxide, sodium based systems, amines incorporated on silica nano particles (see for example W02008021700) and basic ion exchange resins (see for example W02008131132 or W02008061210) have been proposed. Moreover, the natural carbonation of peridotite and the iron fertilization of oceans have been suggested as natural systems which capture and sequester atmospheric CO2.

Amines immobilized on solid supports are known to be suitable to capture CO2 from air, as amine groups react with CO2 at ambient temperatures and release the CO2 upon modest heating in excess of 40°C. The absorption of CO2 in liquid amine solutions is well studied and it is known, that amines interact with CO2 to form either carbamate or bicarbonate species as shown in reaction schemes 1 and 2 respectively. R denotes a proton or any form of substituent group and B is a base molecule, which is usually an amine or hydroxyl ion.

### Reaction Scheme 1. Carbamate Formation

CO2 + R2NH + B ↔ R2NCO2- + BH+ (1)

### Reaction Scheme 2. Bicarbonate Formation

CO2 + H2O + B ↔ HC03- + BH+ (2)

The enthalpy of reaction for carbamate formation was suggested to be 94.6kJ/mol CO2, for bicarbonate formation 124kJ/mol CO2 and the heat of adsorption for water condensation on the sorbent is 47.2kJ/mol H2O.

Reaction scheme 1 consumes 2 moles of amine groups per 1 mole of CO2 captured and reaction scheme 2 consumes 1 mole of amine groups and 1 mole of water per 1 mole of CO2 captured, hence, the maximum achievable CO2 over amine ratio is 0.5 for carbamate formation and it is 1 for bicarbonate formation. These maximum CO2 over amine ratios can only be reached, if the partial pressure of CO2 in the feed gas. is greater than 5% - 10%. The chemical equilibrium data applies for liquid amine systems as well as for dry CO2 adsorption on amine modified solid sorbents. However, for low CO2 partial pressures, as in the case of CO2 capture from atmospheric air, the maximum achievable CO2 over amine ratio is only around 0.4 for reaction at 25°C.

Amine modified solid CO2 sorbents have been prepared through grafting, surface polymerization or physisorption of amines on a solid support. High amine densities in the range of 7-10 mmol N/g, which are necessary for high capacity CO2 sorbents, can be prepared with such preparation methods, however, when grafting or surface polymerization are employed, high amine densities were achieved only on mesoporous high surface area supports. Solid supports for CO2 capture from atmospheric air need to be available in large quantities and need to be cheap though, as the low concentration of CO2 in atmospheric air requires the treatment of tremendous air volume flows. However, mesoporous high surface area supports are not yet available commercially. The idea to incorporate amines on low cost commercially available supports is not new though. Thus far studies include clay (see for example US 690 8497), fly ash (see for example US 654 7854) and glass fiber (see for example J. Appl. Polym. Sci. 2008, 108, (6), 3851-3558) as low cost solid supports.

### SUMMARY OF THE INVENTION

The invention describes a regenerative structure containing a sorbent for capturing CO2 reversibly from any gas stream, however, it is especially suitable for capturing CO2 from ambient air.

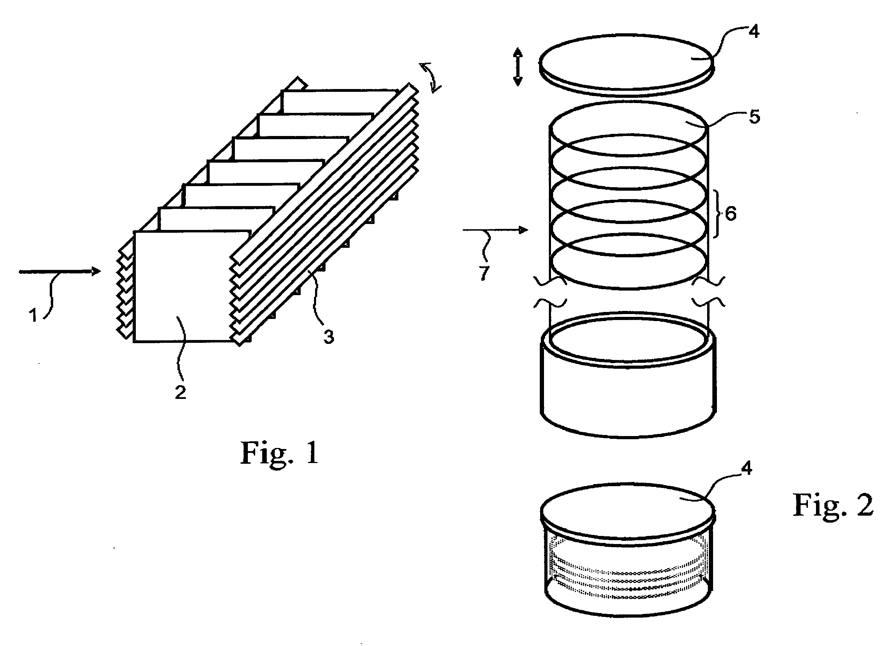

The structure can be regenerated, i.e. the absorbed CO2 can be released again, through temperature increase and/or pressure reduction; though, it is especially designed for the use with low grade heat sources, e.g. solar energy or industrial waste heat. The heat can be added to the structure via any form of heat exchanger or, also by direct or indirect solar irradiation. During the regeneration process ("desorption") a suitable construction like shutters, multiple layers of perforated plates, a cylindrical structure that is covered with a lid or others seals the sorbent containing structure from the environment in order to capture the released CO2 and pipe it out of the system (Fig. 1 and Fig. 2).

The system can be designed the way that the CO2 adsorption phase takes place during the night (when the system is cold) and the desorption phase takes place during the day while the system is heated up by direct or indirect solar irradiation. Such a system has the advantage that no installation for turning on and of the heat source for the desorption process is needed but rather the natural, daily cycles of the sun are used to drive the adsorption and desorption cycles of the system.

The desorption process can be supported by a gas stream (e.g. air, water vapor, CO2) that purges the structure, preferably at atmospheric or reduced pressure. This gas stream can also be used to heat up the system for the desorption process, i.e., the gas can be heated up in any form of heat exchanger before entering the structure

In order to produce not nearly pure CO2 but rather CO2 enriched air that contains 0.1% to 80% of CO2 which is for example demanded by greenhouse operators who fertilize their plants with higher CO2 concentrations the system can be designed the way that air is used as purge gas during the desorption process. The CO2 content of the air is thereby increased. This system has the advantage that the desorption is more efficient and can be carried out at lower temperatures due to the lower partial pressure of CO2 during the desorption process.

The structure/sorbent is composed of amine groups, in the following referred to as "composition 1", or amine groups plus hydroxyl groups, in the following referred to as "composition 2", or amine groups plus hydroxyl groups plus epoxy resins, in the following referred to as "composition 3", or amine groups plus epoxy resins, in the following referred to as "composition 4" on a fiber roving, fiber fabric, fiber band, fiber tube, fiber mat, fiber wool, single fiber filament, staple fibers, twisted staple fibers, twists or yarn. The fiber itself can be also made (spun) of composition 1 or composition 2 or composition 3 or composition 4, preferably mixed with another material, which gives the fiber the needed structural support.

Fiber roving, fiber fabric, fiber bands, fiber tubes, fiber mats, fiber wool, single fiber filaments, staple fibers, twisted staple fibers, twists or yarn, preferably featuring a diameter on the micro-scale range of 1 to 80 micrometers and a length on the macro-scale range of 10cm to 10m, are especially suitable for capturing CO2 from atmospheric air, as said fiber structure can provide a macroscopic wide and porous flow structure, preferably featuring a void fraction in the range of 0.50 to 0.99 during adsorption. The use of the expression diameter shall not imply that the fibre filaments have a circular cross-section. Indeed they may have any kind of cross-section, rectangular, quadratic, circular, oval etc, and the dimensions given here shall indicate the range for the minimum extension in the cross-section, the maximum extension in the cross-section and/or for the Average extension in the cross-section.

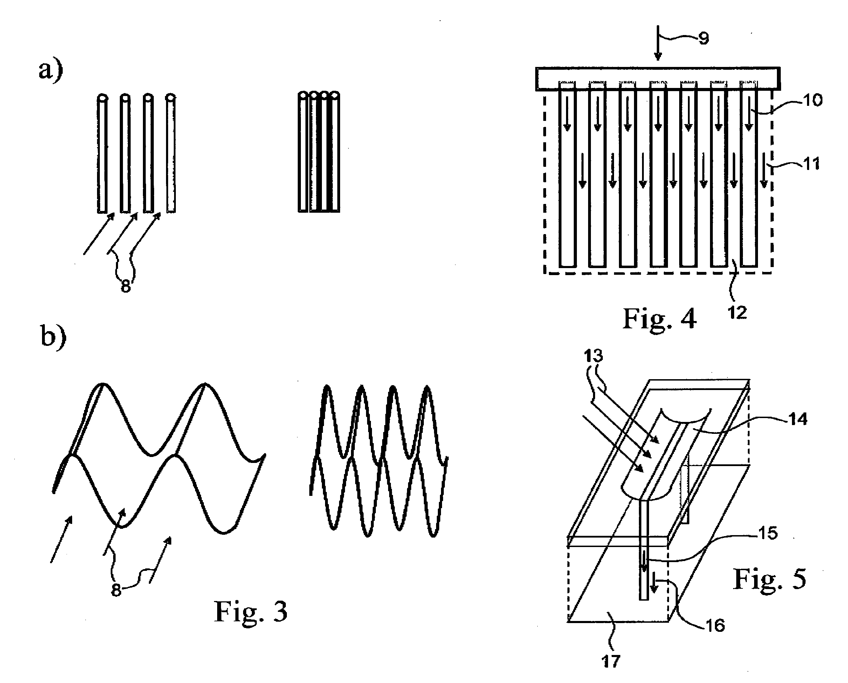

The void fraction is hereby defined as the ratio of the volume of the complete flow structure minus the volume occupied by the fiber structure and sorbent material, and the volume of the complete flow structure including the volume occupied by the fiber structure and sorbent material. The long fibres of micro diameter allow the build-up of ideal structures with such void fraction, e.g. by suspending or attaching them on a carrier structure or by incorporating them into structures such as woven or nonwoven elements. Through such a structure, an air stream can pass, as e.g. illustrated in Fig. 3, left hand side, with a flow velocity - suitable for capturing an economically feasible amount of CO2 per unit time - in the range of 0.01 m/s to 30 m/s, preferably in the range of 0.1 m/s to 10 m/s, more preferably in the range of 0.3 m/s to 4 m/s, driven by very small pressure gradients only between intake and outlet of the structure, preferably in the range of 0.005 Pascal to 500 Pascal, more preferably in the range of 0.05 Pascal to 80 Pascal.

These pressure gradients can be generated by natural phenomena including but not limited to wind, natural convection or density gradients in the gas stream created through temperature gradients, preferably generated by solar irradiation on parts of the structure. Preferably, the air stream is driven through the structure by wind, more preferably by wind at wind speeds in the range of 0.05 m/s to 15 m/s. Thereby, preferably the flow velocity of the air stream through the structure is not substantially smaller than the velocity of the incoming wind, more preferably it is not smaller than 50% of the velocity of the incoming wind.

Flow velocities of the air stream in the ranges defined above are necessary, since too small flow velocities would result in too little CO2 throughput through the system per unit cross section and per unit time, making the system uneconomical, and too high flow velocities would result in too high mechanical stresses on the structure implied by the fluid's flow. At the present atmospheric CO2 concentration and at a temperature of 20°C, a flow velocity of 0.5 m/s yields an annual throughput of around 11 metric tons CO2 per m² flow cross section, a flow velocity of 1 m/s an annual throughput of around 22 metric tons CO2 per m² flow cross section and a flow velocity of 4 m/s an annual throughput of around 88 metric tons CO2 per m² flow cross section. These values correspond to the maximum amount of CO2 that can be possible captured per year and per unit cross section at the corresponding flow velocities.

Such a fiber structure does not require a pump or a fan to drive the air through it, which is crucial for energy and cost efficient CO2 capture from air, as more than 1500kg of air have to pass through the said structure to capture 1kg of CO2. At the same time said fiber structure comprises preferably a microscopic structure featuring a high surface area in the range of 1-100m2/g to allow for efficient CO2 adsorption on the surface of the fibers (or any of the compositions 1-4 attached to the surface of the fibers, respectively). Furthermore, fibers can be brought from said wide and porous form during CO2 adsorption (Fig. 3 left hand side) into a compact form during desorption (Fig. 3 right hand side). Fibers are advantageous, since they have a large surface area compared to their mass and volume (between 0.1 and 100 m2/g). This allows for relatively many CO2 molecules being adsorbed on the surface of the fibers (or any of the compositions 1-4 attached to the surface of the fibers, respectively) while mass and volume of the structure and therefore thermal mass and dimensions of the whole structure are relatively small. The advantages of a compact desorption form are on the one hand the reduced amount of air in the CO2 capture system, which increases the CO2 purity. On the other hand the energy requirement for CO2 desorption is reduced through a smaller thermal mass of the compact form of the system during desorption and less energy losses to the surroundings.

The idea of using amine functionalized fiber substrates or fibers made of crosslinked polyamines for CO2 capture applications is one aspect, normally the idea of using fiber structures is only to supply large specific surface areas and not to reduce the pressure drop across the structure. Therefore, as opposed to the novel structure presented here, such structures are not optimized for an air stream passing through them, driven by the kinetic energy of the wind only.

Andreopoulos et al. (Polymers for Advanced Technologies 1991, 2, 87-91) modified polyethylene fibers, 38mm in diameter, with a polyethylenimine/epoxy resin coating and studied their CO2 adsorption capacity. The CO2 adsorption capacity evaluated in this study was poor, because of the small specific surface area of the functional amine coating. Andreopolous et al. concluded that the CO2 capture capacity can be improved by coating polyethylenimie on porous structures or on fibers with very small diameter. Moreover it was stated, that amine films or amine fibers could be prepared without using any carrier substrate, just by crosslinking the amine groups.

Li et al. (Journal of Applied Polymer Science 2008, 108, 3851-3858) tested glass fiber shortcut coated with a polyethylenimine/epoxy resin mixture for its CO2 capture capacity and outperformed the results of Andreopoulos et al. significantly by using a shortcut glass fiber substrate having a very thin diameter of around 10 micrometers.

In general, amine modified fibers can be manufactured through coating amines on a fiber support or through spinning fibers out of amine groups containing mixtures.

In the former case, the fiber support of the sorbent can be made of any organic or inorganic material, however, materials which have surface functional groups, preferably carboxyl and/or carbonyl and/or hydroxyl surface functional groups or those materials whose surface can be easily functionalized to achieve said surface functional groups are preferred. Among said materials, preferably carbon, polyacrylnitrile, rayon, lignin, cellulose, lyocell, polylactic acid, polyvinyl alcohol, poly(ethylene terephthalate), polyacrylic acid, polyvinyl amine or a mixture thereof are suitable materials, more preferably the renewable materials lignin, cellulose, lyocell, polylactic acid or a mixture thereof are suitable. The surface functional groups are necessary for bonding the sorbent covalently to the fiber material to avoid volatile sorbent losses during operation. Andreopolous et al. and Li et al. did not bond the amine coating covalently to the fiber substrate, but just physisorbed the amine coating on the substrate. Andreopolous et al. did not check the recyclability of their fibrous sorbent, however, Li et al. performed two subsequent CO2 adsorption and desorption experiments and achieved a CO2 loading of 4.12 mmol CO2/g sorbent for the initial CO2 adsorption experiment and 3.68 mmol CO2/g sorbent during the second CO2 adsorption run, hence the CO2 capacity dropped by around 8%, which is most probably due to volatile amine losses during the first desorption experiment. The covalently bonded amine structure presented here, is a fully reversible sorbent for CO2 capture from air and increases thus the lifetime and hence the economics of the said CO2 capture structure significantly compared to previously proposed designs and remedies the issue of volatile amine losses.

The process of coating fibers imposes certain problems for high output manufacturing of fibers featuring a micro-scale diameter and a macro-scale length. Most preferably multi filament fiber roving is used as a CO2 capture structure, however, if multi filament fiber roving is coated with amine groups, preferably trough an immersion bath, it is difficult to accomplish a uniform coating for outer and inner fibers of a roving. Hence, the direct spinning of multifilament fiber roving featuring a micro-scale diameter and a macro-scale length out of or comprising amine groups containing material is highly desirable. Andreopoulus et al. stated that crosslinked polyethylenimine structures can be used for direct fiber manufacture without the need for a carrier substrate, however, it was found out experimentally, that even highly crosslinked polyethylenimine forms a sticky structure, which could not be brought into the said fiber form. One of the novelties presented here is to preferably mix amine groups containing polymers, more preferably polyethylenimine and/or tetraethylenpentamine, with a second polymer, preferably chosen from the materials lignin, cellulose, lyocell, polyvinyl alcohol, polyvinyl amine, polyacryl acid, polylactic acid or a mixture thereof, more preferably from the renewable materials lignin, cellulose, lyocell, polylactic acid or a mixture thereof, which are known to be spin-able, preferably melt spin-able, and spin the resulting mixture to multifilament fiber roving featuring a micro-scale diameter and a macro-scale length.

The renewable materials lignin, cellulose, lyocell, polylactic acid or a mixture thereof are preferred materials for fiber substrates or spinning materials for the structural support of a CO2 capture structure, as the low concentration of CO2 in air requires the usage of large amounts of the respective CO2 capture structure to capture considerable amounts of CO2. Hence the fiber material or the spinning material for the structural support, respectively, has to be available in large quantities, its processing should be environmental friendly and it should be recyclable. Li et al. used glass fiber as a fibrous substrate. The manufacturing of glass fiber requires around 48 MJ/kg glass fiber, opposed to roughly 4 MJ/kg fiber made from said renewable sources. Moreover glass fiber has no surface functional groups on its surface, hence additional treatment requiring energy input would be needed to create desirable surface functional groups on the glass fiber substrate. Said renewable materials already have surface functional groups, where for example lignin and cellulose are rich in hydroxyl groups and polylactic acid has carbonyl groups. Therefore the manufacturing of a CO2 capture structure made from said materials is more environmental friendly than glass fiber based CO2 capture structures. Moreover, the usage of said CO2 capture structure is more energy efficient than a structure made from a glass fiber substrate, as the density of said materials is around 1.0-1.5 g/cm3 whereas the density of glass fiber is around 2.5-2.8g/cm3, hence said materials reduce the thermal mass of a CO2 capture structure, which reduces the desorption energy penalty. The recycling of glass fiber is possible, however, it requires additional energy input, as the fiber material has to be melted again or at least the surface functionalization has to be redone. However, CO2 capture structures made from said renewable materials can be easily recycled through e.g. thermal decomposition, releasing heat, which can be used for industrial processes making the recycling of the said CO2 capture structure more energy efficient than the recycling of glass fiber substrates. Andrepolous et al. used polyethylene as fiber material, which is produced from fossil sources. Fossil resources are a limited commodity and hence not feasible as fiber material or spinning material for the structural support for a recyclable CO2 capture structure. Moreover polyethylene has no surface functional groups, which requires additional surface treatment to create surface functional groups on polyethylene, which is necessary to design non-volatile sorbents. Hence, from an energy efficiency and recycling point of view, said materials are superior to the present state of art.

Carbon fiber is a possible option as fiber material, as it is characterized by its high thermal conductivity as well as its low heat capacity. Therefore carbon fiber can be used on the one hand to give the sorbent the necessary structural integrity and on the other hand the carbon fiber can be used as a heat exchanger transferring heat from an outside heat source to the CO2 capture system or transferring heat from the CO2 capture system to an outside heat sink (Fig. 4). This double function of the support reduces the need of adding a costly additional heat exchanger to the CO2 capture system. Furthermore, the thermal mass of the CO2 capture system is reduced when the fibers are used as heat exchanger, which increases the energy efficiency of the CO2 capture system. If solar energy is used as heat source for the desorption step, the carbon fiber support can be radiated directly through the sun and transfer the heat to the CO2 capture system (Fig. 5). Moreover, the carbon fiber can be activated, preferably through high temperature treatment above 800°C (typically in the range of 800-1200°C) in a steam atmosphere, and achieve surface areas in excess of 2000m2/g, preferably of around 2000-3000m2/g. The higher the functional surface area of a sorbent, the more efficient will be the CO2 transport to the amine functionalized surface, hence, the more CO2 can be captured per sorbent mass, allowing to design more compact energy efficient systems. Finally, carbon fiber can be made of the renewable material lignin or it can be made of the semi-synthetic material rayon.

As an exemplary CO2 capture structure polyethylenimine/epoxy resin and tetraethylenpentamine/epoxy resin modified carbon fiber was studied. Carbon was preliminarily chosen as fiber material, as it is commercially available, as it can be made from renewable sources and as its surface functionalization can be achieved easily through air oxidation at elevated temperatures.Air oxidation creates active sites at the carbon fiber surface, which react readily with amine groups, reducing the volatility of the amine coating. The amine groups can be incorporated on the carbon fiber through impregnation, where highly branched polyethylenimine (PEI) and tetraethylenpentamine (TEPA) can be used as amine carrier. PEI was chosen, as it is characterized by low volatility and because it adsorbs CO2 on solid supports even at low CO2 concentrations. TEPA is a volatile amine monomer, characterized by high CO2 adsorption and desorption rates and was therefore chosen as amine carrier. Both samples contain a certain amount of epoxy resin (D.E.R.™ 332) added to the amine polymer, which reduces the volatility of the amine coating and increases its structural integrity.

It can be shown that such amine modified sorbents, having surface areas in the range of 1-100m2/g, are suitable for CO2 capture from air.

Carbon fiber can be air oxidized before wet impregnation. The resulting sample is denoted as CFAO.

Oxidized polyacrylonitrile fibers are another preferred option as fiber material as, on the one hand, oxidized polyacrylonitrile fibers are largely available and cheap and on the other hand oxidized polyacrylonitrile fibers possess a high density of surface functional groups. Surface functional groups, e.g. carbonyl, carboxylic, nitrogen containing, phenolic or hydroxyl groups, are important in bonding the amine groups and/or epoxy resins covalently to the fiber surfaces, which reduces the volatility of the sorbent. Furthermore, the fiber can be made of composition 1 or composition 2 or composition 3 or composition 4, preferably mixed with a spinning material for the structural support. Spinning materials for the structural support can be any organic material, where lignin, cellulose, lyocell, polyvinyl alcohol, polyvinyl amine, polyacryl acid, polylactic acid or a mixture thereof are preferred materials, more preferably the renewable materials lignin, cellulose, polylactic acid or a mixture thereof. The advantages of using fibers made of composition 1 or composition 2 or composition 3 or composition 4, preferably mixed with said spinning materials for the structural support is one the one hand that the fiber production is facilitated and on the other hand that the energy efficiency of the CO2 capture system is likely to be increased, as the thermal mass of the system is reduced. Before composition 1 or composition 2 or composition 3 or composition 4.are incorporated on the surface of the support, the fiber support can be surface treated by any well known technology, e.g. rare earth solution surface modification, air oxidation, gamma ray radiation, electrochemical oxidation, plasma treatment etc. The advantage of surface modification is on the one hand the increase in surface area of the fiber and on the other hand the increase in surface functional groups, e.g. carbonyl, carboxylic, nitrogen containing, phenolic or hydroxyl groups, on the fiber surface. The importance of the surface functional groups has been described above.

The loading of composition 1 or composition 2 or composition 3 or composition 4 on the support can be achieved by any well known technology, e.g. wet impregnation technique, grafting or surface polymerization, where grafting and surface polymerization or wet impregnation through an immersion bath are the preferred options. Grafting and surface polymerization allow the amine groups and/or epoxy resins to be bonded covalently to the fiber, which is important in reducing the volatility of the sorbent. If wet impregnation technique is used to load composition 1 or composition 2 or composition 3 or composition 4 on the surface of the fiber, it is important to have sufficient surface functional groups on the fiber surface and to add an epoxy resin or any form of crosslinking molecule, e.g. acids, in order to achieve a partial covalently bonded structure. Any amine can be used for the coating of the fiber support or for the fiber material itself, however, secondary and tertiary amines are preferred over primary amines for their lower enthalpy of reaction with CO2. If grafting or wet impregnation are chosen to load amines and eventual hydroxyl groups on the support surface, amine containing polymers having a low volatility, e.g. (poly)ethylenimine, tetraethylenpentamine, diethanolamine, triethanolamine or mixtures thereof, are especially preferred. For the addition of hydroxyl groups glycerin, low molecular weight polyethylene glycol, diethanolamine or triethanolamine are preferred. Furthermore, it is important, that the incorporated amine groups as well as the eventual hydroxyl groups must not be harmful to humans and the environment in case of volatile losses.

If composition 1 or composition 4 is used as a sorbent in the said structure, CO2 is suggested to adsorb from a humid gaseous stream by reaction scheme 2 as given above. If the sorbent of the structure is comprised of composition 2 or composition 3, CO2 is suggested to adsorb from a gaseous stream by reaction scheme 1, in somewhat more detailed given as

### Reaction scheme 3. Carbamate Type Zwitterions Formation

CO2 + ROH + R1R2NH ↔ ROH2(+) + R1R2NCOO(-),

where R1 = H for primary amines and R2 = alkyl/aryl for secondary amines.

The equilibrium of reaction schemes 1, 2 and 3 is on the right side for temperatures lower than around 40-60°C and shifts to the left side for temperatures higher than around 40-60°C when the gaseous reactant is synthetic air containing 500ppm of CO2.

The amine modification of the fiber filaments can be achieved through wet impregnation technique. Carbon fibers can be air oxidized for example at 500°C for at least one hour before wet impregnation. Air oxidation increases the amount of reactive surface groups, which facilitates the wettability of the carbon fiber, as well as air oxidation increases the specific surface area of the support.

The weight percentage of coating can be fixed around 50 wt. %. The desired amount of PEI or TEPA, respectively, can be dissolved in an organic solvent such as ethanol at a weight ratio of 1:4-1:15, preferably of around 1:8. The amount of epoxy resin (e.g. D.E.R.™ 332) can be fixed, so that the molar ratio of amine groups to epoxy resin is in the range of 100: 1-20:1, preferably around 40:1-50:1. The epoxy resin can be dissolved in an organic solvent such as ethanol at a weight ratio of 1:4-1:15, preferably of around 1:8 and added drop wise under stirring to the PEI or TEPA mixture. The fibres can be wetted in the solvent and added to the amine epoxy resin mixture. The slurry can subsequently be stirred for at least 30 minutes followed by evaporating the organic solvent under stirring at an elevated temperature, in case of ethanol above or equal to 80°C. The resulting amine modified (carbon) fiber can be dried in an oven at elevated temperature, for example at around 100°C for 3-12 hours, for example for around 6 hours.

Generally speaking, a structure containing a sorbent with amine groups that is capable of a reversible adsorption and desorption cycle for capturing CO2 from a gas mixture is proposed wherein said structure is composed of fiber filaments preferably featuring a diameter in the micro-scale range and a length in the macro scale-range. According to the invention, the fiber material can e.g. either carbon, polyacrylnitrile, rayon, lignin, cellulose, lyocell, polylactic acid, polyvinyl alcohol, poly(ethylene terephthalate), polyacrylic acid, polyvinyl amine or a mixture thereof.

According to an embodiment, the sorbent is containing hydroxyl groups and/or epoxy resins in addition to the amine groups of the sorbent. Preferably the molar ratio of amine to epoxy resin is in the range of 100:1 - 20:1, more preferably in the range of 50:1 - 35:1. According to a further embodiment, the sorbent with amine groups is based on polyethyleneimine and/or tetraethylenepentamine.

Further preferably, the fiber filaments serve as a mechanical support and structure for guiding the fluid flow and are coated with the sorbent or are spun directly of the sorbent material mixed with a spinning material for structural support, where the spinning material is an organic material, preferably either lignin, cellulose, lyocell, polyvinyl alcohol, polyvinyl amine, polyacryl acid, polylactic acid or a mixture thereof, more preferably a renewable material chosen to be either lignin, cellulose, lyocell, polylactic acid or a mixture thereof.

The fibres are preferably made of carbon, polyacrylnitrile, rayon, lignin, cellulose, lyocell, polylactic acid, polyvinyl alcohol, poly(ethylene terephthalate), polyacrylic acid, polyvinyl amine or a mixture thereof preferably with a diameter in the range of 1-80 micrometer, preferably in the range of 4-8 micrometer and having surface functional groups, preferably carboxyl and/or carbonyl and/or hydroxyl surface functional groups.

According to a further embodiment, the fibres have a surface area in the range of 1-100 m2/g.

The fibres can be in the form of fibre rovings, fibre fabrics, fibre bands, fibre tubes, fibre mats, fibre wool and/or are mounted on and/or attached to a porous or nonporous substrate. Furthermore the present invention relates to a method for making a structure as disclosed above. According to this method preferably carbon fiber material is in a first step oxidised, preferably by subjecting it to a temperature above 100°C, more preferably above 300°C for a time span of preferably at least 10 minutes, more preferably at least an hour, and subsequently the fibre material is impregnated and/or coated with polymeric amine material. The polymeric amine material can therefore be dissolved in an organic solvent and the solvent subsequently evaporated, possibly followed by drying at a temperature above 50°C, more preferably above 80°C for a time span of at least one hour, preferably of at least four hours. The fiber can also be immersed in a non diluted polymeric amine bath to avoid solvent usage and solvent evaporation.

Furthermore, the present invention relates to a process for CO2 adsorption and desorption that uses the structure as disclosed above, preferably made using a method as disclosed above.

In this process, preferably the spacing of individual or of groups of fiber filaments is reduced during the desorption cycle.

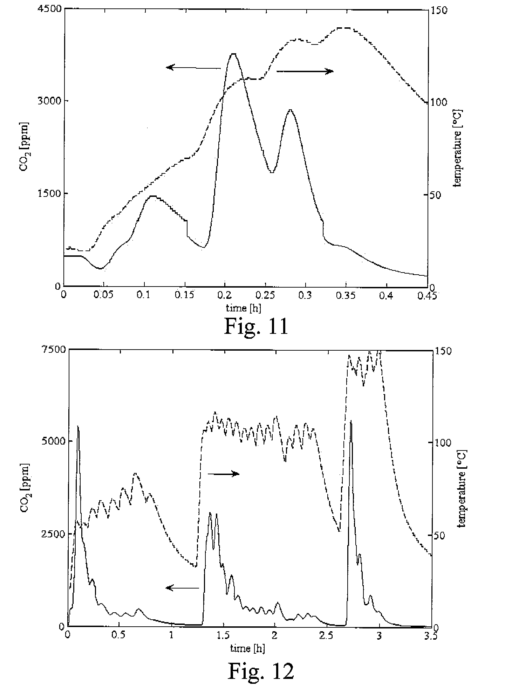

According to a preferred embodiment of this process, the desorption cycle is carried out by shifting the equilibrium of the absorption-desorption reaction towards the desorption side, particularly by heating the fiber filaments or by decreasing the pressure around the fiber filaments or both of it, wherein preferably for adsorption the structure is kept at a temperature in the range of 0-30°C, and for desorption the structure is kept at a temperature in the range of 50-200°C, preferably in the range of 50-100°C, as at this temperature the equilibrium of reaction schemes 1 through 3 are shifted back to left hand side and CO2 is released in a gaseous state (Fig. 11 and Fig. 12).

During the desorption process a gas can be pumped through the fiber filaments purging the desorbed CO2 out of the fiber filament structure wherein preferably the purging gas is air, water vapor or CO2 and/or a wherein further preferably the purging gas is heated up before entering the fiber filaments and thereby fulfills the task of heating up the fiber filaments. The purging gas can be air and the outcome of the process can be CO2-enriched air with a CO2 content of 0.1% up to 80%. During the desorption process also the pressure in the desorption chamber could be reduced and desorption can be achieved at reduced pressure and elevated temperature either with or without a purge gas, which is preferably chosen among air or water vapor or CO2.

Furthermore the present invention relates to an apparatus for a process according as described above, comprising a reaction chamber that contains said structure, flow inlets for gaseous reactants and flow outlets for gaseous products, wherein flow inlets, flow outlets, the pressure and/or the temperature of the reaction chamber are controllable in order to enforce CO2 adsorption on or desorption from said structure, wherein preferably fiber filaments are heated up directly or indirectly by solar irradiation during the adsorption cycle.

According to a first preferred embodiment, the daily cycles of sunshine during daytime and darkness during nighttime are used to drive the adsorption and desorption cycles, so that preferably adsorption will take place at night and desorption during the day, using solar energy as the source of process heat.

Preferably, the fiber filaments serve as a heat exchanger transferring heat from an outside heat source to the reaction chamber and/or from the reaction chamber to an outside heat sink when the cycle is reversed.

Preferably such apparatus comprises at least one additional reaction chamber so that a plurality of desorption and/or adsorption processes can be carried out at the same time. Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a structure of spaced plates consisting of fibre filaments with laterally arranged shutters that can be closed for desorption;
- Fig. 2: shows a stack of plates consisting of fibre filaments in a cylindrical structure;
- Fig. 3: shows a) a fiber roving, left: Adsorption - Wide Porous Geometry, right: Desorption - Compact Geometry; b) a Fiber Band , left: Adsorption - Wide Porous Geometry, right: Desorption - Compact Geometry;
- Fig. 4: shows a reaction chamber for carbon dioxide capture;
- Fig. 5: shows a reaction chamber for carbon dioxide capture using solar irradiation as energy source;
- Fig. 6: shows the breakthrough curve of the sorbents prepared in example 1 at a relative humidity of 100%;
- Fig. 7: shows the breakthrough curve of the sorbents prepared in example 2 at a relative humidity of 100%;
- Fig. 8: shows the experimental setup for CO2 adsorption measurement, a cylindrical packed bed arrangement;
- Fig. 9: shows the thermogravimetric analysis of the air oxidized carbon fiber CFAO and the amine modified sorbents CFAO-PEI and CFAO-TEPA;
- Fig. 10: shows CO2 breakthrough curves of CFAO-PEI at a relative humidity of 50% and 100%;
- Fig. 11: shows the CO2 desorption curve of CFAO-PEI saturated with CO2 at 50% relative humidity;
- Fig. 12: shows the CO2 desorption curve of CFAO-PEI saturated with CO2 at 100% relative humidity;
- Fig. 13: shows the breakthrough curve of CFAO-TEPA at 50% relative humidity;
- Fig. 14: shows the CO2 desorption of CFAO-TEPA tested at 50% relative humidity;
- Fig. 15: shows the CO2 adsorption of zeolite 13X tested at 50% relative humidity;
- Fig. 16: shows CO2 desorption of zeolite 13X tested at 50% relative humidity;
- Fig. 17: shows long-term cyclic CO2 adsorption-desorption experiments on CFAO- PEI at 100% relative humidity; and
- Fig. 18: shows short-term cyclic adsorption-desorption experiments on CFAO-PEI at 100% relative humidity.

### DESCRIPTION OF PREFERRED EMBODIMENTS

Herein amine modified sorbents were developed for CO2 capture from atmospheric air, where the structural support was carbon fibres, in particular air oxidized carbon fiber and the amine coating was preferably chosen among a polyethylenimine-epoxy resin mixture or a tetraethlyenpentamine-epoxy resin mixture.

The following examples investigate the CO2 and H2O loading of the PEI and TEPA modified carbon fiber when exposed to a humid air stream containing 500ppm of CO2. The CO2 loading of the amine modified carbon fiber was challenged with the CO2 loading achieved on zeolite 13X, which is used commercially for CO2 removal from air. Finally the PEI containing carbon fiber was tested for regenerability through running cyclic adsorption-desorption experiments and its energy requirement for regeneration was calculated.

The sorbent can be characterized by N2 adsorption, scanning electron microscope and thermogravimetric analysis. The CO2 loading on the sorbent was verified in a packed bed arrangement, where the feed gas was humid synthetic air containing 500ppm of CO2 at 20°C. The water loading on the sorbent was studied through thermogravimetric analysis. The CO2 and H2O loading on the amine modified carbon fiber was challenged with humid CO2 adsorption at the same conditions on commercial zeolite 13X. The polyethylenimine-epoxy resin modified carbon fiber (see sorbent preparation example 4) exhibited a CO2 loading of 58.80mg CO2/g sorbent and a H2O loading of 123.4mg H2O/g sorbent at 100% relative humidity and 20°C and was fully regenerable over 3 adsorption-desorption cycles. The CO2 loading on the polyethylenimine-epoxy resin modified carbon fiber at 50% relative humidity and 20°C was 12.49 mg CO2/g sorbent and the H2O loading was 65.11mg H2O/g sorbent. The tetraethylenpentamine-epoxy resin fiber (see sorbent preparation example 5) showed a very high CO2 loading of 82.48 mg CO2/g sorbent and a H2O loading of 73.52mg H2O/g sorbent at 50% relative humidity and 20°C. Both amine modified sorbents outperformed the CO2 loading on commercial zeolite 13X and at the same time both amine modified sorbents adsorbed less moisture than commercial zeolite 13X. The thermal energy requirement for the regeneration of the polyethylenimine-epoxy resin modified carbon fiber, which was tested at 100% relative humidity, was 424.79kJ/mole CO2.

### Examples

Polyethylenimine (average molecular weight 25000g/mole, Aldrich), tetraethylenepentamine (molecular weight 189g/mole, Aldrich) and D.E.R.™ 332 (molecular weight 178g/mole, Sigma) were received from Sigma-Aldrich and used as received. Carbon fiber was received from Suter Swiss-Composite Group and zeolite 13X (Z10-02ND) was received from Zeochem AG.

### Example 1. Preparation of Crosslinked Amine Containing Sorbent

A sorbent comprised of 47.75wt. % carbon fiber (Mitsubishi DIALEAD®, 11 micrometer diameter), 47.75 wt. % polyethylenimine (molecular weight 25000 g/mol) and 4.5 wt. % D.E.R.™ 332 epoxy resin was prepared as follows:
5g of polyethylenimine was dissolved in 40g of ethanol and stirred thoroughly for 30 minutes. To this mixture 0.46g of D.E.R.™ 332 dissolved in 3.68g of ethanol was added under stirring. Carbon fiber was air oxidized for 3 hours at 420°C, then cooled down to 20°C. 1g of the air oxidized carbon fiber was added to a new beaker and wetted in 8g of ethanol. Subsequently 9.83g of the polyethylenimine / D.E.R.™ 332 / ethanol mixture was added to the wetted carbon fiber. The resulting mixture was stirred for 30min and then the ethanol was evaporated at 80°C. The impregnated carbon fiber was dried in an oven for 6 hours at 100°C.

### Example 2. Preparation of Crosslinked Amine and Hydroxyl Containing Sorbent

A sorbent comprised of 47.8 wt. % carbon fiber (Mitsubishi DIALEAD®, 11 micrometer diameter), 36.4 wt. % tetraethylenpentamine (molecular weight 189 g/mol), 11.5 wt. % glycerin and 4.3% D.E.R.™ 332 epoxy resin was prepared as follows:
1.9g of tetraethlyenpentamine and 0.6 glycerin were dissolved in 20g ethanol and stirred. To this mixture 0.22g of D.E.R.™ 332 epoxy resin were added under stirring and mixed thoroughly for 30 minutes. Carbon fiber was air oxidized for 3 hours at 420°C, then cooled down to 20°C. 2.5g of the air oxidized carbon fiber was added to the tetraethylenpentamine / glycerin / D.E.R. ™ 332 / ethanol mixture and stirred for 2 hours. Subsequently the ethanol was evaporated at 80°C and the resulting slurry was dried in an oven at 100°C for 6 hours.

### Example 3. CO2 Adsorption Measurement

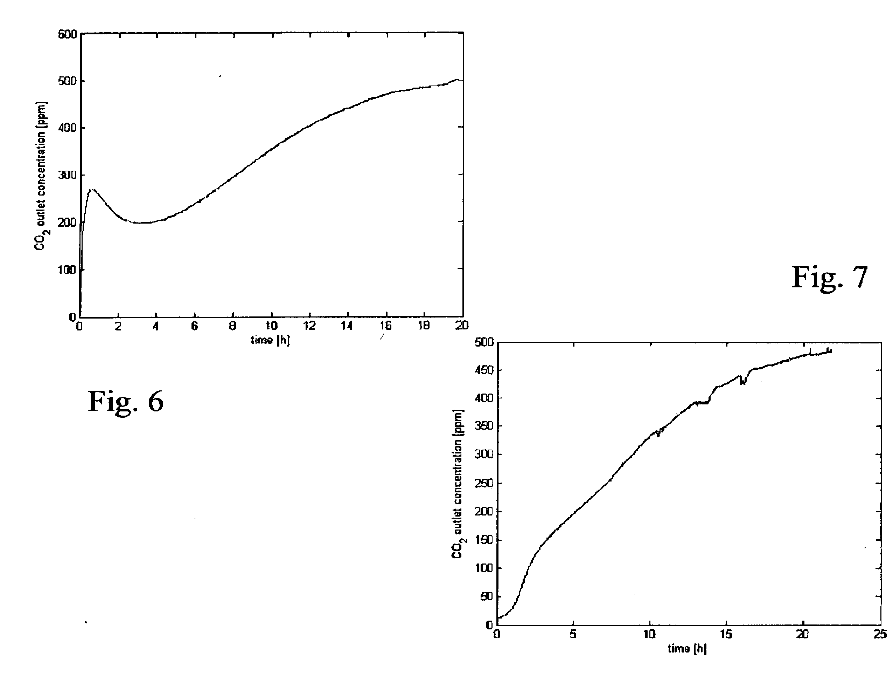

CO2 uptake measurements were performed in a cylindrical glass column of 20mm inner diameter. The column was loaded with 1.5g of sorbent. Before CO2 adsorption easurements, the sorbent was cleaned in 350ml/min of argon flow at 120-140°C. Subsequently the sorbent was cooled down to 20°C and synthetic air containing 500ppm of CO2 was introduced into the column at a flow rate of 286ml/min. Before passing through the sorbent bed, the synthetic air was bubbled through a water bath at 20°C. After the synthetic air passed the sorbent bed it was cooled down to 2°C to condense the moisture and fed into a Siemens IR gas analyzer. The breakthrough curves of the sorbents prepared in example 1 and example 2 are shown in Fig. 6 and Fig. 7 respectively. The CO2 mass loading after the CO2 uptake measurement was 56.8mg CO2/g sorbent for the sample of example 1 and it was 84.1mg CO2/g sorbent for the sample of example 2. The sorbent prepared in example 1 was subjected to three adsorption and desorption cycles to prove the regenerability of the sorbent. The CO2 adsorption capacity in each cycle is shown in table 1. The CO2 capture capacity was constant over all three consecutive cycles and therefore the sorbent is assumed to be fully regenerable.

**Table 1. Repeated CO2 Adsorption-Desorption Cycles**

| Cycle | 1 | 2 | 3 |
|---|---|---|---|
| mg CO2 / g sorbent | 56.8 | 57.9 | 57.6 |

### Example 4. Preparation of Polyethylenimine/Epoxy Resin Containing Sorbent

A sorbent comprised of carbon fiber (HTA 1K), polyethylenimine (molecular weight 25000 g/mol) and D.E.R.™ 332 was prepared as follows:
5g of polyethylenimine was dissolved in 40g of ethanol and stirred thoroughly for 30 minutes. To this mixture 0.48g of D.E.R.™ 332 dissolved in 3.84g of ethanol was added under stirring. Carbon fiber was air oxidized for 1 hour at 550°C, then cooled to 20°C. 1g of the air oxidized carbon fiber was added to a new beaker and wetted in 8g of ethanol. Subsequently 9g of the polyethylenimine / D.E.R.™ 332 / ethanol mixture was added to the wetted oxidized carbon fiber. The resulting mixture was stirred for 30min and then the ethanol was evaporated at 80°C. The impregnated carbon fiber was dried in an oven for 6 hours at 100°C. This sorbent will be referred to as CFAO-PEI in the following.

### Example 5. Preparation of Tetraethylenepentamine/Epoxy Resin Containing Sorbent A sorbent comprised of carbon fiber (HTA 1K), tetraethylenpentaime (molecular weight 189 g/mol) and D.E.R.™ 332 was prepared as follows:

5g of tetraethylenepentamine was dissolved in 40g of ethanol and stirred thoroughly for 30 minutes. To this mixture 0.55g of D.E.R.™ 332 dissolved in 4.40g of ethanol was added under stirring. Carbon fiber was air oxidized for 1 hour at 550°C, then cooled to 20°C. 1g of the air oxidized carbon fiber was added to a new beaker and wetted in 8g of ethanol. Subsequently 9g of the tetraethylenepentamine / D.E.R.™ 332 / ethanol mixture was added to the wetted oxidized carbon fiber. The resulting mixture was stirred for 30min and then the ethanol was evaporated at 80°C. The impregnated carbon fiber was dried in an oven for 6 hours at 100°C. This sorbent will be referred to as CFAO-TEPA in the following.

### Example 6. Characterization of the Amine Modified Carbon Fiber

All samples were characterized by N2 adsorption/desorption at 77K on a Micrometritics TriStar. CF and CFAO were degassed (Micrometritics FlowPrep 060) at 200°C, CFAO-PEI and CFAO-TEPA were degassed at 125°C and zeolite 13X was degassed at 250°C each for two hours in dry helium flow prior to N2 adsorption. The specific surface areas of the samples were calculated by BET method. The pore size and pore size distribution were obtained by BJH method. The morphology of the material was observed on a Hitachi TM-1000 tabletop microscope. The amount of amine coating on the carbon fiber surface was determined by thermogravimetric analysis (TGA) on a Netzsch STA 409 CD, where the respective sample was heated at 10°C/min to 750°C under argon flow at a flow rate of 100ml/min. For all TGA experiments correction runs without sample were performed, to account for buoyancy effects.

The textural properties of CF, CFAO, CFAO-PEI , CFAO-TEPA and zeolite 13X are shown in Table 2. As expected, air oxidation of CF increased its specific surface area, which is beneficial to achieve high CO2 loadings. The surface area of CFAO-PEI was 1.35m2/g, indicating that the PEI coating reduced the surface area of the structural support significantly. The deposition of PEI on CFAO resulted in bulky polymer agglomerates between the fiber filaments, which reduced the specific surface area of the sorbent. The surface area of CFAO-TEPA was 6.23m2/g, which is comparable to other studies, where solid supports have been prepared through wet impregnation technique modified MCM-41 with 50 wt. % PEI resulting in a surface area of 4.2m2/g modified partially template free MCM-41 with 50 wt. % TEPA resulting in a surface area of 1.5m2/g modified as-prepared SBA-15 with 50 wt. % TEPA resulting in a surface area of 7m2/g modified as-synthesized SBA-15 with 30 wt. % TEPA and 20 wt. % diethanolamine resulting in a surface area of 3.9m2/g modified MCM-41, MCM-48 and SBA-15 with 50 wt. % PEI each, resulting in surface areas of 4m2/g, 26m2/g and 13m2/g, respectively and Li et al. (Langmuir, 2008, 24, (13), 6567-6574) modified glass fiber with 45 wt. % of a PEI epichlorohydrin mixture resulting in a surface area of 3.65m2/g. The structure of the CFAO-TEPA coating is a thin membrane around the fiber filaments and thin TEPA membranes formed between the fiber filaments, which is also the desired form for the PEI coating.

**Table 2. Textural properties of the studied materials**

| | surface area [m2/g] | pore volume [cm3/g] *10^(-3) | mean pore size [nm] |
|---|---|---|---|
| CF | 3.16 | 7.21 | 9.00 |
| CFAO | 44.05 | 20.53 | 4.93 |
| CFAO-PEI | 1.35 | 24.95 | 105.4 |
| CFAO-TEPA | 6.23 | 8.49 | 8.39 |
| Zeolite 13X | 605.55 | 112.65 | 11.9 |

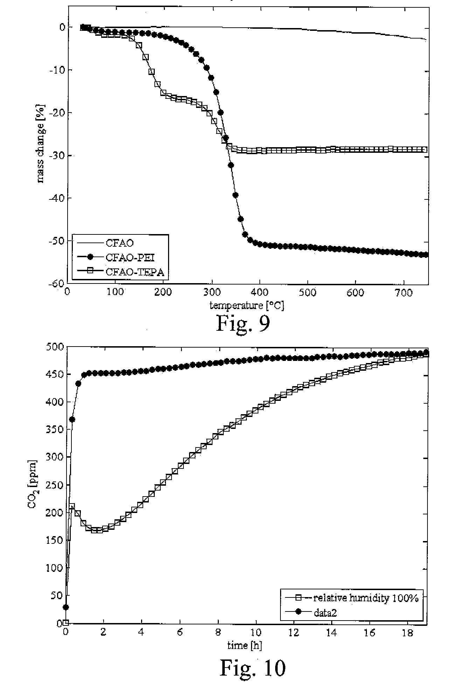

Figure 9 shows the thermogravimetric analysis of the air oxidized carbon fiber CFAO and the amine modified sorbents CFAO-PEI and CFAO-TEPA. The mass drop of CFAO up to 750°C in an inert atmosphere is negligible and therefore the mass drop of the amine modified sorbents is due to amine losses, adsorbed moisture and adsorbed CO2. The sorbents CFAO-PEI and CFAO-TEPA lost 1-2 wt. % up to 100°C, which was mainly due to adsorbed CO2 and moisture. The total mass drop of CFAO-TEPA is 28.5 wt. %, which is significantly lower than the expected 50 wt. %. Assuming the molar ratio of amine groups to epoxy resin was kept constant during the sorbent preparation, the amine density of CFAO-TEPA was calculated to be 6.80 mmol N/g sorbent. CFAO-PEI started to decompose strongly at around 250°C. The total mass drop of CFAO-PEI was 50 wt. %, which confirms the successful sorbent preparation. Hence the amine density of CFAO-PEI was 10.6 mmol N/g sorbent.

### Example 7. CO2 and H2O Adsorption Measurement

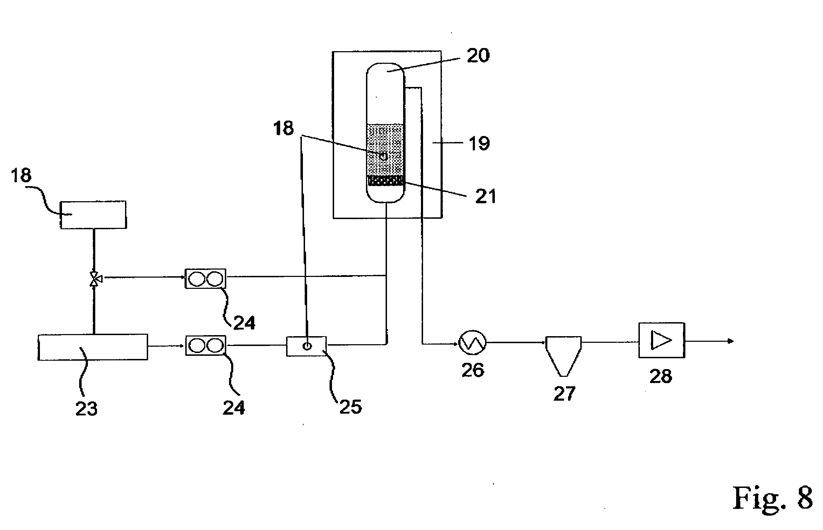

CO2 uptake of the amine modified carbon fiber was studied in a cylindrical packed bed arrangement, which is depicted in Figure 8. The packed bed had an inner diameter of 20mm and was filled with 1.5g of sorbent material resulting in 20mm of packed bed height for the amine modified sorbent and around 10mm for zeolite 13X. Before every adsorption experiment the amine modified sorbent material was cleaned at 140°C in dry argon flow at a flow rate of 350ml/min and zeolite 13X was cleaned at the same flow conditions at around 250°C, to assure complete removal of adsorbed moisture. After cleaning, the sorbent was cooled to 20°C in 350ml/min argon flow before starting CO2 adsorption. During CO2 adsorption, synthetic air containing 500ppm of CO2 was fed to the sorbent bed at a total flow rate of 290ml/min. Synthetic air was chosen over ambient air as feed gas, as therefore all experiments had consistent boundary conditions and are reproducible. Experiments were performed at 50% or 100% relative humidity at 20°C, where either 145ml/min or 290ml/min of synthetic air were bubbled through the water bath, which was kept isothermal at 20°C, and the remainder of the dry synthetic air feed was bypassing the water bath. The synthetic air feed bubbled through the water bath was assumed to be saturated with humidity at 20°C. Desorption experiments were performed in dry argon at 350ml/min at up to 140°C for the amine modified sorbent and at around 250°C for zeolite 13X. The CO2 concentration in the off-gas was continuously analyzed by an IR analyzer (Siemens Ultramat 23) equipped with two detectors for the CO2 concentration ranges of 0-1000ppm and 0-5%, at 1Hz sampling rate and 0.2% of range detection limit.

For all adsorption experiments, the CO2 uptake was calculated by integrating the signal of the IR gas analyzer. As for the adsorption experiments, the signal of the IR gas analyzer during desorption experiments was integrated as well, to compute the amount of CO2 desorbed and verify the CO2 mass loading obtained from the adsorption measurement. The H2O uptake was calculated from thermogravimetric analysis. After the CO2 adsorption measurement in the packed bed arrangement was completed and before the desorption was started, 5mg of sorbent was removed from the packed bed and put in the TGA unit. The sample in the TGA unit was heated at 10°C/min to the above stated desorption temperatures in 100ml/min argon flow. The observed mass drop was assumed to be due to the desorbed amounts of H2O and CO2, where the amount of adsorbed CO2 is known from the packed bed experiments. Hence the amount of adsorbed H2O was calculated from the total mass drop minus the adsorbed amount of CO2.

The CO2 breakthrough curves of CFAO-PEI at a relative humidity of 50% and 100% are shown in Figure 10. The CO2 loading at 50% relative humidity was 12.49mg CO2/g sorbent which is significantly lower than the equilibrium loading of 58.80mg CO2/g sorbent at 100% relative humidity. The amine efficiencies at 50% and 100% relative humidity were 2.68% and 12.63%, respectively, where amine efficiency is defined as the amount of CO2 captured per mass sorbent over the amine density of the sorbent. The promoting effect of water on CO2 adsorption was observed in several studies. The enhanced diffusion of CO2 into the PEI layer at a relative humidity of 100% is verified in Figure 10. The breakthrough curve for CO2 adsorption at 100% relative humidity is characterized by an initial sharp rise in CO2 outlet concentration, however, the CO2 concentration peaked and decreased afterward to around 170ppm outlet concentration, which was kept constant for 1 hour followed by a slow rise in CO2 outlet concentration to 500ppm. The water loading of CFAO-PEI at a relative humidity of 100% at 20°C was 123.4 mg H2O/g sorbent where it was 65.11mg H2O/g sorbent at a relative humidity of 50% at 20°C, as determined through thermogravimetric analysis. The CO2 desorption curve of CFAO-PEI saturated with CO2 at 50% relative humidity is shown in Figure 11. The CO2 desorption is characterized by 3 desorption concentration peaks, where the first one starts at around 40°C, the second one at around 90°C and the third one at around 110°C. PEI is composed of primary, secondary and tertiary amines, where the molar ratio of primary to secondary to tertiary amines is around 1:1.3:1. This agrees very well with the experimental results shown in Figure 11, as the ratio of the areas under the first, second and third CO2 concentration peak is around 1:1.3:1, indicating that primary, secondary and tertiary amines react equally with CO2, even at a low partial pressure of 500ppm. The CO2 desorption curve of CFAO-PEI saturated with CO2 at 100% relative humidity is shown in Figure 12. As in the case of 50% relative humidity, the desorption curve is characterized by three desorption peaks, starting again at around 40°C, 90°C and 110°, however, for the case of CO2 adsorption at 100% relative humidity the reaction with primary amines was favored resulting in a 1.3:1:1 ratio for cumulative desorbed amounts of CO2 from primary, secondary and tertiary amines, respectively. The mass balances of CO2 adsorption and CO2 desorption at 50% and 100% relative humidity were 107.2% and 98.5%, respectively. Mass balance is defined as the amount of CO2 released during desorption over the amount of CO2 captured during adsorption. Therefore CFAO-PEI is considered as fully reversible CO2 sorbent, when heated to temperatures of around 120°C in an inert atmosphere. Within this study argon was chosen as inert gas, however, for an industrial application water vapor is suggested as inert gas,. CO2 itself or air are not suitable as purge gases, as both result in ureate formation when heated to above 130°C, which reduces the cycling capacity of the sorbent.

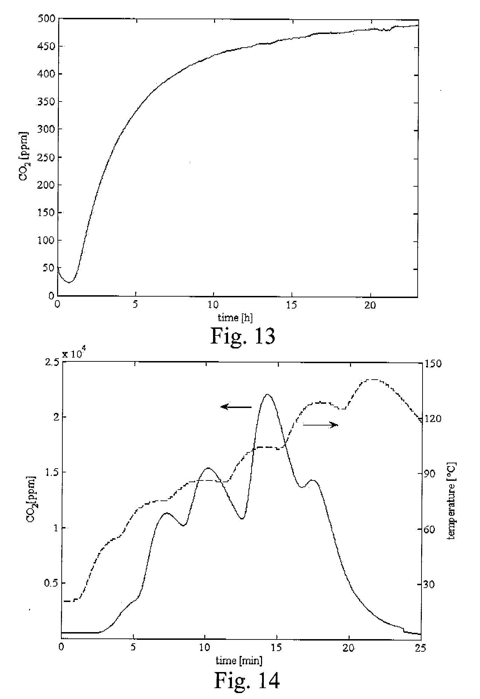

The breakthrough curve of CFAO-TEPA at 50% relative humidity is shown in Figure 13. CFAO-TEPA strongly adsorbs CO2 within the first hour of the experiment, removing nearly all incoming CO2 molecules. Afterward the CO2 outlet concentration rises slowly and the experiment is stopped after 23 hours at a CO2 outlet concentration of around 480ppm. Therefore the obtained CO2 loading of 82.48 mg CO2/g sorbent underestimates the possible maximal CO2 loading slightly. The amine efficiency is 27.57% and therefore close to the theoretical maximum value of 0.420 for primary amines. As the secondary over primary amine ratio of TEPA is 1.5, the maximum achievable amine efficiency is slightly different from the value 0.4. The CO2 loading on zeolite 13X at a O02 concentration of 5% and 25°C under dry conditions is 2.05 mmol/g sorbent, which is comparable to the CO2 loading on CFAO-TEPA at 20°C, 50% relative humidity and 0.05% CO2 inlet concentration. Cyclic CO2 loadings of about 2 mmol CO2/g sorbent on solid CO2 sorbents are considered to significantly reduce the energy requirement for CO2 capture from flue gases, when compared to the energy penalty of a commercial aqueous monoethanolamine (MEA) CO2 scrubbing process. Therefore CFAO-TEPA is a candidate sorbent making CO2 capture from air an accepted measure to tackle global CO2 emissions. The water loading on CFAO-TEPA was determined by TGA to be 73.52 mg H2O/g sorbent. The CO2 desorption curve of CFAO-TEPA is shown in Figure 14. CO2 desorption is fast and all trapped CO2 is removed below 100°C. The volatility of CFAO-TEPA can be tackled if the amount of epoxy resin is increased relative to the amine content or if any other crosslinking molecule is addes, preferably an acid, more preferably oxalic acid.

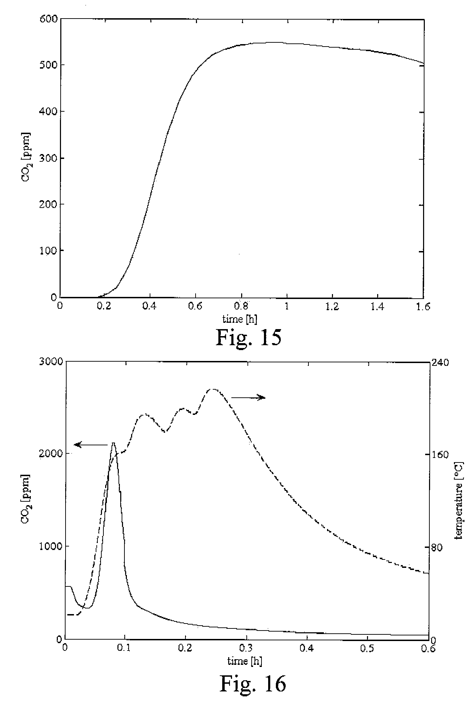

CO2 adsorption on CFAO-PEI and CFAO-TEPA was challenged with CO2 adsorption on zeolite 13X at 50% relative humidity and 20°C. The CO2 breakthrough curve for adsorption on zeolite 13X is shown in Figure 15 and is characterized by the typical CO2 roll-up. The CO2 loading on zeolite 13X under humid conditions was 4.90mg CO2/g sorbent, therefore lower than the CO2 loading on the regenerable sorbent CFAO-PEI. The H2O loading on zeolite 13X was determined to be 185.10 mg H2O/g sorbent. CO2 desorption of zeolite 13X (see Figure 16) starts at around 80°C. The desorption is complete, resulting in a mass balance of 99.59%. Zeolite 13X adsorbs more moisture than CFAO-PEI and CFAO-TEPA and at the same time less CO2, which is unfavorable for CO2 capture from air.

### Comparisons with patent literature

Finally the results obtained within this study are compared to available literature data from other studies on CO2 capture from air, which can be found in the patent literature only.

In W02008021700 discloses a CO2 loading of 27mg CO2/g sorbent on fumed silica nanoparticles coated with 47.5 wt % PEI and 10 wt. % polyethylene glycol for dry air containing 380ppm of CO2.

W02008131132 discloses a CO2 loading of 1mmol CO2/g sorbent for CO2 capture from air with an ion exchange resin. Moreover, WO2008131132 discloses the rate of CO2 exhalation of the ion exchange resin to be 1e-4 mmol/g/s and the rate of CO2 uptake to be comparable to this value.

The rate of CO2 uptake averaged over the duration of the adsorption experiment of CFAO-PEI were 1.93e-5 mmol/g/s at 100% relative humidity and 4.15e-6 mmol/g/s at 50% relative humidity. The CO2 uptake rate of CFAO-TEPA was 2.26e-5 mmol/g/s at 50% relative humidity. Note that the maximum CO2 uptake rates of CFAO-PEI and CFAO-TEPA were 6.61e-5 mmol/g/s and 1.00e-4 mmol/g/s, respectively. Interestingly W02008131132 discloses similar CO2 uptake rates as in the experiments given here, although the ion exchange resin had a surface area of 40cm2/g, therefore around three orders of magnitude less than CFAO-PEI or CFAO-TEPA.

CFAO-PEI proves to be a fully reversible sorbent for CO2 capture. To increase the CO2 uptake rate and the CO2 loading, PEI can be loaded on the CFAO surface in such a way, that PEI forms a thin membrane around the fiber filaments. The CO2 uptake rate and the CO2 loading of CFAO-PEI were enhanced significantly in an atmosphere of 100% relative humidity, which was due to the transition to a gas-liquid separation process. The amine coating of CFAO-TEPA in the form of a thin membrane around the fiber filaments results in high CO2 uptake rates and high achievable CO2 loadings even at a low relative humidity of 50% at 20°C. TEPA can be physisorbed and partially grafted on the CFAO surface.

### Example 8. Recyclability of CFAO-PEI

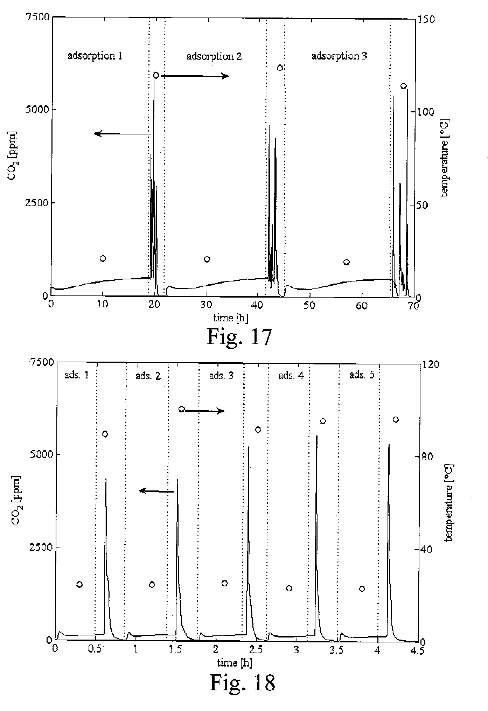

As CFAO-PEI proved to be fully reversible in the previous experiments, the cyclic capacity of CFAO-PEI was tested in 3 subsequent adsorption and desorption experiments, where the adsorption run was performed until full saturation of the sorbent was reached, subsequently referred to as long-term cyclic adsorption-desorption experiment. Moreover CFAO-PEI was tested in 5 subsequent adsorption and desorption experiments, where the adsorption was stopped after 30 minutes, subsequently denoted as short-term cyclic adsorption-desorption experiments. The cyclic adsorption experiments were performed at 100% relative humidity and 20°C. CFAO-PEI was fully reversible in all cycling experiments. The experimental data of the 3 long-term cycles is shown in Figure 17 and the experimental data of the 5 short-term cycles is shown in Figure 18. The CO2 loadings, mass balances and amine efficiencies for the long-term cycles are shown in Table 3, where the respective values for the short-term runs are shown in Table 4.

**Table 3. Long-term cyclic CO2 adsorption-desorption experiments on CFAO-PEI at 100% relative humidity**

| Cycle number | 1 | 2 | 3 |
|---|---|---|---|
| CO2 loading [mg CO2/g sorbent] | 58.80 | 61.90 | 60.98 |
| Mass balance [%] | 98.48 | 95.53 | 96.36 |
| Amine efficiency [%] | 12.63 | 13.30 | 13.10 |

**Table 4. Short cycle CO2 adsorption-desorption experiments on CFAO-PEI at 100% relative humidity**

| Cycle number | 1 | 2 | 3 | 4 | 5 |
|---|---|---|---|---|---|
| CO2 loading [mg CO2/g sorbent] | 4.00 | 4.00 | 4.00 | 4.00 | 4.00 |
| Mass balance [%] | 101.70 | 97.57 | 98.74 | 100.51 | 101.13 |
| Amine efficiency [%] | 1.30 | 1.30 | 1.28 | 1.30 | 1.30 |

### Example 9. Energy Balance

Most studies on amine modified sorbents have not discussed the energy requirement for sorbent regeneration. On the one hand, it was claimed that maximizing the cyclic CO2 loading capacity reduces the energy cost, however on the other hand the energy requirement for H2O desorption hasn't been discussed, but cyclic adsorption and desorption of water molecules increases the energy requirement for sorbent regeneration significantly. Hence the ratio of H2O loading per mass sorbent over the CO2 loading per mass sorbent, subsequently referred to was w, has to be minimized. Li et al. (Langmuir, loc. cit.) reported the water adsorption capacity of PG-R20:1-W45 to be 6.69 mmol H2O/g sorbent, where the CO2 adsorption capacity of the same sorbent was 3.98 mmol CO2/g sorbent, resulting in w=1.68.

Water is adsorbed on the sorbent through hydrogen bonding with amine groups and/or surface functional groups or through bicarbonate formation. To capture CO2 without bicarbonate formation, the incorporation of hydroxyl groups is an interesting option, as in the presence of hydroxyl groups one mole of amine groups reacts with one mole of CO2 to form carbamate type zwitterions. The dosing of the hydroxyl group incorporation has to be well established, as hydroxyl groups are hydroscopic in nature and increase water adsorption if used excessively.

To regenerate the sorbent, sensible heat has to be supplied, in order to bring the sorbent, including the CO2 and H2O loading, to the desorption temperature. The sensible heat of the CO2 loading was assumed to be the heat required to bring gaseous CO2 from the adsorption temperature to the desorption temperature. The sensible heat of the H2O loading was assumed as the heat required to bring liquid H2O from the adsorption temperature to the desorption temperature. If the vapor pressure of H2O at the desorption temperature is higher than the desorption pressure, it is assumed, that additionally the energy required to heat gaseous H2O from the boiling point at the desorption pressure to the desorption temperature has to be incorporated in the sensible heat term of H2O.

The cyclic CO2 capacity of CFAO-PEI was 58.80mg CO2/sorbent where the water loading at 100% relative humidity was 123.4mg H2O/g sorbent, resulting in w=5.13. Using this the total heat requirement for sorbent regeneration sums up to 424.79 kJ/mole CO2, where 45.89% of this value are necessary to provide the heat for H2O desorption, showing the importance of reducing the water loading on the sorbent.

The heats of CO2 and H2O adsorption are irreversibly lost during adsorption, as the heat of adsorption is too low to be recovered economically. The temperature evolvement of the packed bed during CO2 adsorption at 100% relative humidity on CFAO-PEI shows that the heat of CO2 and H2O adsorption heated the sorbent bed initially by 10°C to around 30°C, which is too low to be recovered. The sensible heat requirements can be reduced through the introduction of heat exchanger networks, which has not been taken into account for this study.

CFAO-PEI reduces the energy requirement for CO2 capture from air by 83.01% when compared to the carbonation-calcination cycle of calcium oxide, however, it is still slightly above the heat of carbon dioxide formation during e.g. combustion of coal, which is 393kJ/mole CO2. The intermittency issues doubted for the carbonation-calcination cycle are remedied by using CFAO-PEI as sorbent, as it can be driven by storable low grade solar heat or waste heat.

### LIST OF REFERENCE SIGNS

- 1: gas stream
- 2: plates, consisting of fiber filaments
- 3: shutters can be closed for desorption
- 4: lid
- 5: plates consisting of fiber filaments
- 6: large spacing
- 7: gas stream
- 8: Air containing CO2
- 9: external heat source
- 10: conductive heat transfer
- 11: conductive / convective heat transfer to coating and gas in reaction chamber
- 12: reaction chamber
- 13: direct radiation of fiber
- 14: concentrator for solar irradiation
- 15: conductive heat transfer
- 16: conductive / convective heat transfer to coating and gas in reaction chamber
- 17: reaction chamber
- 18: Thermocouples
- 19: electrical furnace
- 20: glass cylinder, inner diameter 20 mm typical bed height 20 mm
- 21: quartz frit
- 22: Argon
- 23: synthetic air
- 24: flow controller
- 25: water bath
- 26: quenching unit
- 27: filter
- 28: IR detector

## Claims

1. A structure containing a sorbent with amine groups that is capable of a reversible adsorption and desorption cycle for capturing CO2 from a gas mixture wherein said structure is composed of or comprises fiber filaments.

2. A structure according to claim 1, wherein the fiber filaments have a diameter in the range of 1 to 80 micrometers, preferably in the range of 4-30 micrometer, and a length of at least 10 cm, preferably in the range of 10cm to 10m, wherein preferably the fibers are either
a) made from a material comprising surface functional groups suitable for bonding the sorbent covalently to the fiber surface or
b) are directly spun from a mixture of an preferably organic material, serving as structural support, and said sorbent or spun from sorbent alone having structural support properties in fibre form.

3. A structure according to any of the preceding claims, wherein the fiber material is carbon, polyacrylnitrile, rayon, lignin, cellulose, lyocell, polylactic acid, polyvinyl alcohol, poly(ethylene terephthalate), polyacrylic acid, polyvinyl amine or a mixture thereof and/or the spinning material of the structural support is lignin, cellulose, lyocell, polyvinyl alcohol, polyvinyl amine, polyacryl acid, polylactic acid or a mixture thereof, wherein preferably the fiber material and/or the spinning material of the structural support is made of renewable materials, more preferably lignin, cellulose, polylactic acid or a mixture thereof.

4. A structure according to any of the preceding claims, wherein the sorbent is covalently attached to the fibre filaments.

5. A structure according to any of the preceding claims, wherein the sorbent is containing hydroxyl groups and/or epoxy resins in addition to the amine groups, wherein preferably the molar ratio of amine to epoxy resin is in the range of 100:1 - 20:1, more preferably in the range of 50:1 - 35:1.

6. A structure according to any of the preceding claims, wherein the sorbent with amine groups is based on polyethyleneimine and/or tetraethylenepentamine.

7. A structure according to any of the preceding claims, wherein the fibres are arranged in the form of fibre rovings, fibre fabrics, fibre bands, fibre tubes, fibre mats or fibre wool and provide a macroscopic flow structure with a void fraction in the range of 0.5-0.99, where void fraction is defined as the ratio of: the volume flown through by the air stream not filled by the fiber structure, and the sum of the volume flown through by the air stream not filled by the fiber structure and the volume of the fiber structure, wherein preferably the flow structure is such that at a pressure gradient between intake and outlet of the flow structure, preferably in the range 0.005 Pascal to 500 Pascal, more preferably in the range 0.05 Pascal to 80 Pascal is sufficient for allowing air to pass through, preferably with a flow velocity in the range of 0.01 m/s to 30 m/s, preferably in the range of 0.1 m/s to 10 m/s, more preferably in the range of 0.3 m/s to 4 m/s, wherein further preferably it has a microscopic structure featuring a high surface area in the range of 1 - 100 m2/g for efficient CO2 adsorption..

8. A structure according to any of the preceding claims, wherein the spacing of individual or of groups of fiber filaments can be reduced for the desorption cycle.

9. A method for making a structure according to any of the preceding claims, wherein the fiber is
either immersed in a sorbent bath for impregnation and/coating, preferably in that it is pulled out of the sorbent bath after 1 minute, preferably after 30 minutes, dried at a temperature of above 50°C, more preferably above 80°C, for a time span of at least an hour, more preferably 3 hours, followed by rinsing of the not covalently bonded sorbent molecules with an organic solvent or water, followed by drying the sorbent at a temperature of above 50°C, preferably above 80°C, for a time span of an hour, more preferably for a time span of 3 hours or wherein the spinning material of the structural support is mixed with the sorbent material followed by melt-spinning the mixture at a temperature of above 120°C, preferably at a temperature of above 180°C,
or made from a material comprising surface functional groups suitable for bonding the sorbent covalently to the fiber surface or
directly spun from a mixture of a preferably organic material, serving as structural support, and said sorbent or spun from sorbent alone having structural support properties in fibre form.

10. A process for CO2 adsorption and desorption that uses the structure of any of the claims 1-8, preferably made using a method according to claim 9 .

11. A process according to claim 10, wherein the spacing of individual or of groups of fiber filaments is reduced during the desorption cycle.

12. A process according to claim 10 or 11 wherein the desorption cycle is carried out by shifting the equilibrium of the absorption-desorption reaction towards the desorption side, particularly by heating the fiber filaments or by decreasing the pressure around the fiber filaments or both of it, wherein preferably for adsorption the structure is kept at a temperature in the range of 0-35°C, and for desorption the structure is kept at a temperature in the range of 50-120°C. and/or wherein during the desorption process a gas, preferably at atmospheric or reduced pressure, is pumped and/or guided through the fiber filaments purging the desorbed CO2 out of the fiber filament structure, wherein preferably the purging gas is air, water vapor or CO2, and/or a wherein further preferably the purging gas is heated up before entering the fiber filaments and thereby fulfills the task of heating up the fiber filaments, preferably **characterized in that** the purging gas is air and the outcome of the process is CO2-enriched air with a CO2 content of 0.1 % up to 80%.

13. An apparatus for a process according to any of the claims 10-12, comprising a reaction chamber that contains said structure, flow inlets for gaseous reactants and flow outlets for gaseous products, wherein flow inlets, flow outlets, the pressure and/or the temperature of the reaction chamber are controllable in order to enforce CO2 adsorption on or desorption from said structure, wherein preferably fiber filaments are heated up directly or indirectly by solar irradiation during the adsorption cycle, preferably in which the daily cycles of sunshine during daytime and darkness during nighttime are used to drive the absorption and desorption cycles, so that preferably adsorption will take place at night and desorption during the day, using solar energy as the source of process heat.

14. An apparatus according to claim 13 wherein the fiber filaments serve as a heat exchanger transferring heat from an outside heat source to the reaction chamber and/or from the reaction chamber to an outside heat sink when the cycle is reversed.

15. An apparatus according to any of the claims 13-14, comprising at least one additional reaction chamber so that a plurality of desorption and/or adsorption processes can be carried out at the same time.
